# EUROPEAN PATENT SPECIFICATION

(11) **EP 2 174 427 B1**
(45) Date of publication and mention of the grant of the patent: **01.11.2017**
(21) Application number: 07848865.7
(22) Date of filing: 09.11.2007
(51) Int. Cl.: H04B 7/00

(54) **APPARATUS AND METHOD FOR THE RADIO COVERAGE OF A VEHICLE, USABLE IN PARTICULAR IN THE FIELD OF RAILWAY TRANSPORT OR THE LIKE**
VORRICHTUNG UND VERFAHREN FÜR FUNKABDECKUNG EINES FAHRZEUGS, BENUTZBAR INSBESONDERE AUF DEM GEBIET DES EISENBAHNTRANSPORTS ODER DERGLEICHEN
APPAREIL ET PROCÉDÉ DE COUVERTURE RADIO D'UN VÉHICULE, UTILISABLES EN PARTICULIER DANS LE DOMAINE DU TRANSPORT FERROVIAIRE OU AUTRE TRANSPORT SIMILAIRE

(30) Priority: 06.07.2007 IT MO20070227
(43) Date of publication of application: 14.04.2010
(73) Proprietor: JMA Wireless B.V., 1101 CM Amsterdam Zuidoost (NL)
(72) Inventor: NOTARGIACOMO, Massimo, I-48020 S. Agata Sul Santerno (RA) (IT)
(74) Representative: Brunacci, Marco
(86) International application number: PCT/IB2007/003420
(87) International publication number: WO 2009/007778

(56) References cited:
- EP-A- 1 282 327
- EP-A- 1 482 751
- WO-A-2005/048487
- GB-A- 2 426 665

## Description

### Technical Field

The present invention relates to an apparatus and to a relative method for the radio coverage of a vehicle, both usable in particular in the field of railway transport or, in any case, in all those solutions in which the use of means of mass public transport is to be considered such as, for example, motor coaches, aeroplanes or boats/ships.

### Background art

With particular reference to the railway transport sector, the need is known to overcome the limited radio connection between external base radio stations positioned along the area, so-called BTS (Base Transceiver Station), and appliances positioned inside coaches such as, for example, the cellular phones of the passengers.

More specifically, the electrical conduction materials normally used to make the structure and the roofs of the coaches make it difficult or, in the worst cases, impossible, to establish a connection between the base radio stations and the appliances inside the coach.

To overcome this drawback, the use is currently known of appliances that can be installed on board the train and suitable for allowing the connection between the inside and the outside of the coach.

Such apparatus generally comprise one or more repeater devices with respective antennas that can be installed outside the coach and suitable for allowing a two-directional radio communication with the base radio stations.

Each of these repeater devices is associated with transmission and receiver means positioned inside the vehicle and suitable for allowing a two-directional radio communication with appliances such as cellular phones or the like.

The transmission and receiver means can be made up, for example, of a fissured cable installed along the coach or, alternatively, of one or more generally wide-band antennas.

The apparatus can also be equipped with a two-directional amplifier connected in cascade to the repeater device, especially in the case of the use of the fissured cable or, also in the case of having to recover the losses introduced by the passive distribution system.

Though permitting the overcoming of problems deriving from the shielding effect and, in general, from the attenuation caused by the vehicle itself, the above-described known apparatus does however have a number of drawbacks.

The problems mainly relate to the interaction of the apparatus with the existing mobile-radio network and, in particular, the possible de-sensitization of the base radio station whenever the train transits "too close".

In fact, in the case of the transmission of a radio signal from the antenna installed on the train to a nearby base radio station, the latter receives both the noise irradiated by the repeater device and the spurious emissions produced by the inter-modulation.

Consequently, if the distance between the antenna and the base radio station is below a certain minimum, the transmitted noise and the spurious emissions produced by the inter-modulation are of such intensity as to result in the de-sensitization of the base radio station.

The known apparatus is also subject to the so-called "near-far problem", which can occur during train movement if the antenna connected to the repeater device interacts with at least two distinct base radio stations that transmit and receive information at the same time.

In particular, in the event of the antenna being positioned near a first base radio station and far from a second base radio station, the signal received from the first station could disturb the signal received from the second station to the extent of making this not understandable.

The document WO 2005/048487 discloses a repeater for amplifying signals transmitted and received between a communication terminal such as cellular phone and a base station and, more particularly, to a repeater for mobile communication system, which amplifies the signal received from the communications terminal accommodatively to intensity of the signal, or correlatively to the existence of the input signal, and transmits the amplified signal to the base station.

However also this repeater has a number of drawbacks.

### Object of the Invention

The main aim of the present invention is to provide an apparatus and a relative method for the radio coverage of a vehicle, usable in particular in the field of railway transport or the like, which allows to solve the above mentioned problems of interaction with the base radio stations.

Another object of the present invention is to provide an apparatus and a method for the radio coverage of a vehicle usable for radio communication through different service providers and by means of different communication standards. Another object of the present invention is to provide an apparatus and a method for the radio coverage of a vehicle that allow to overcome the mentioned drawbacks of the prior art within the ambit of a simple and rational solution which is easy and effective to use as well as having a fairly low cost.

The above objects are all achieved by this apparatus for the radio coverage of a vehicle, usable in particular in the field of railway transport or the like, comprising first means of communication installable on a vehicle and suitable for the radio reception/transmission of a first signal at input and of a first signal at output from/to at least one remote base radio station, second means of communication installable on said vehicle and suitable for the radio reception/transmission of a second signal at input and of a second signal at output from/to at least one appliance positioned inside said vehicle, and at least one repeater device positioned in between said first and said second means of communication and having at least one amplification unit in reception suitable for receiving said first signal at input and for generating said second signal at output and at least one amplification unit in transmission suitable for receiving said second signal at input and generating said first signal at output, characterized in that said repeater device comprises adjustment means for adjusting the power of the first signal at output from said first means of communication starting with the power measurement of said first signal at input.

The above objects are further achieved by a method for the radio coverage of a vehicle, usable in particular in the field of railway transport or the like, comprising: a first reception phase of a first signal at input from at least a first remote base radio station by means of first means of communication installed on a vehicle; a first amplification phase of said first signal at input to obtain a second signal at output; a first transmission phase of said second signal at output to at least an apparatus located inside said vehicle by means of second means of communication; a second reception phase of a second signal at input coming from said apparatus by means of said second means of communication; a second amplification phase of said second signal at input to obtain a first signal at output; a second transmission phase of said first signal at output to said remote base radio station by means of said first means of communication, characterized in that it comprises at least one adjustment phase of the power of the first signal at output from said first means of communication starting with the power measurement of said first signal at input.

### Brief Description of the Drawings

Further characteristics and advantages will appear more evident from the description of a preferred but not exclusive embodiment of an apparatus and a method for the radio coverage of a vehicle, usable in particular in the field of railway transport and illustrated indicatively by way of non limiting example, in the attached drawings wherein:
figure 1 is a diagram that shows in a general way the application of the apparatus according to the invention in the field of railway transport;
figure 2 is a general functional diagram of the apparatus according to the invention.

### Embodiments of the Invention

With special reference to such figures, by 1 is globally indicated an apparatus for the radio coverage of a vehicle V.

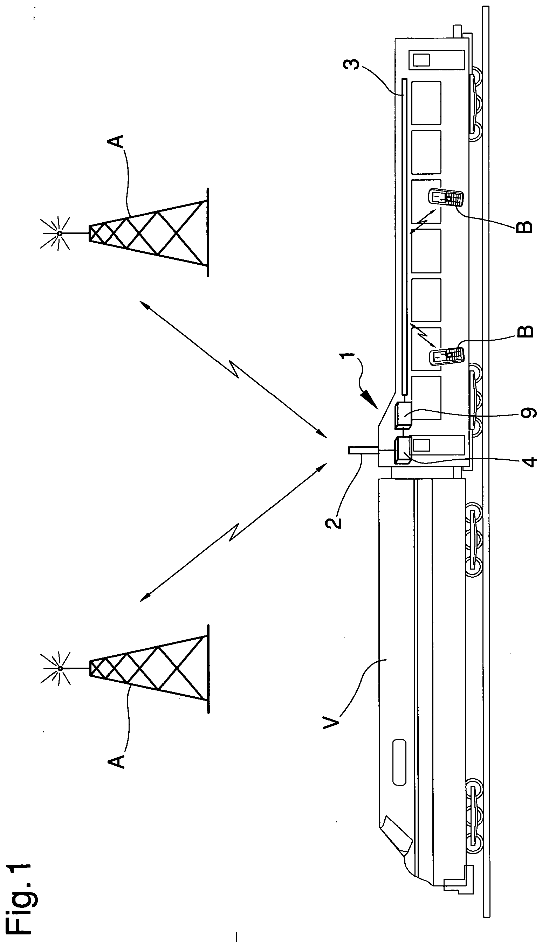

A particular, but not exclusive solution, illustrated in figure 1, considers the use of the apparatus 1 in the field of railway transport, for the purpose of ensuring the radio coverage inside the coaches of a train. The use of the apparatus 1 for different types of means of mass public transport cannot however be ruled out such as, for example, motor coaches, aeroplanes or boats/ships.

The apparatus 1 comprises first means of communication 2, made up of an antenna installable on the vehicle V and suitable for the radio reception/transmission of a first signal at input S_{I1} and of a first signal at output S_{O1} from/to one or more remote base radio stations, indicated in figure 1 by the reference A.

The apparatus 1 also comprises second means of communication 3, made up of a fissured cable installable inside the vehicle V and suitable for the radio reception/transmission of a second signal at input S_{I2} and of a second signal at output S_{O2} from/to at least one appliance B located inside the vehicle itself.

Usefully, the fissured cable 3 installed inside the vehicle V is optimised according to its length and to the band in which it operates and permits obtaining a uniform coverage along the entire train coach.

Alternatively, the second means of transmission 3 can be realised by means of a wide-band antenna installed inside the vehicle V.

The appliances B inside the vehicle V can be of different type and use and can be composed, for example, of cellular phones, palm top computers or the like used by the vehicle users and operating according to different technical systems and/or with different providers.

Usefully, the appliances B can be made up of communication devices suitable for permitting specific radio links with the police or emergency services or, again, of automatic driving and safety control devices of the vehicle V operating according to dedicated communication standards (such as the GSMR standard in the railway field).

A repeater device 4 of the apparatus 1 is placed in between the antenna 2 and the fissured cable 3 and has a first amplification line 5 of the first signal at input S_{I1} from the antenna 2 and a second amplification line 6 of the second signal at input S_{I2} from the fissured cable 3.

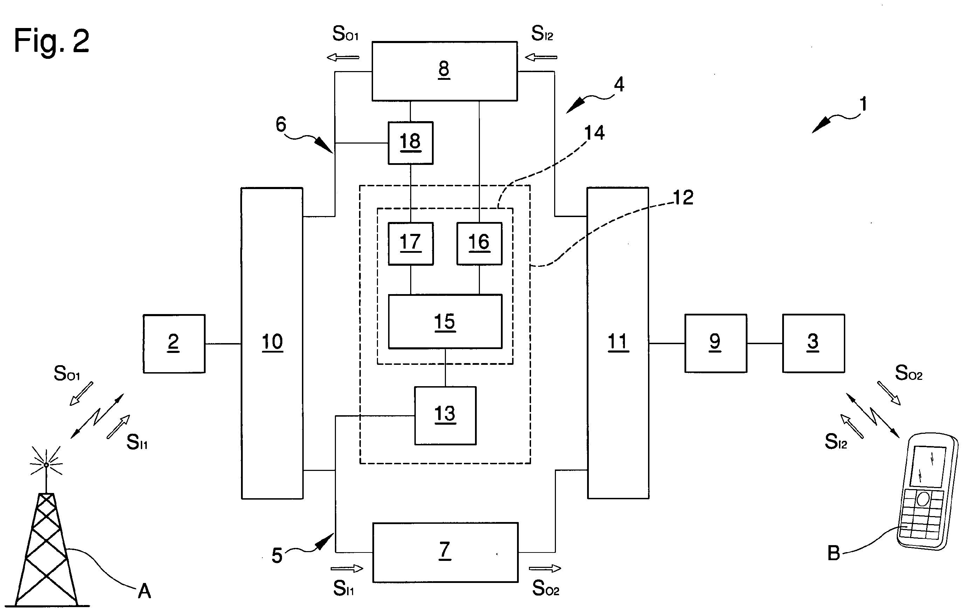

In particular, the first amplification line 5 has an amplification unit in reception, generically indicated in figure 2 by the reference 7, suitable for receiving the above first signal at input S_{I1} from the antenna 2 and for generating the second signal at output S_{O2}, subsequently transmitted by the fissured cable 3 inside the vehicle V.

Similarly, the second amplification line 6 has an amplification unit in transmission, generically indicated in figure 2 by the reference 8, suitable for receiving the above second signal at input S_{I2} from the fissured cable 3 and for generating the first signal at output S_{O1}, subsequently transmitted by the antenna 2 to the base radio station A.

Advantageously, the apparatus 1 is configured in such a way to allow the correct transmission and reception of the signals even in the case of communication between the antenna 2 and more than one base radio station A, so as to minimise the effects of the so-called "near-far problem".

In particular, the amplification units in reception and in transmission 7 and 8 can be made in different ways, depending on the services, the providers, the bands used and the specific technical characteristics required.

Usefully, the amplification unit in transmission 8 is sized so as to maintain the spurious emissions produced by inter-modulation and subsequently transmitted by the antenna 2 below a predetermined threshold (for example -56dBm). This permits limiting the possibilities of desensitization of a base radio station A located near the antenna 2.

In particular, the max power deliverable by the amplification unit in transmission 8 is oversized with respect to the rated operating power so as to ensure the linearity of the amplification on the entire transmission band.

The low gain also permits maintaining off-band amplification within regulatory limits and avoiding disturbances to communication in adjoining bands or of other services or providers.

With particular reference to the realisation of the second means of communication 3 by means of a fissured cable, the apparatus 1 can comprise a supplementary amplifier device 9 linked in cascade to the repeater device 4.

The repeater device 4 comprises a first connection port 10 associated with the antenna 2 and connected to the input of the amplification unit in reception 7 and to the output of the amplification unit in transmission 8.

The first connection port 10 has a duplexer or the like suitable for allowing the transmission of the first signal at output S_{O1} and the reception of the first signal at input S_{I1} by means of the antenna 2 only. Different solutions cannot however be ruled out.

Similarly, the repeater device 4 comprises a second connection port 11 associated with the fissured cable 3 by interposition of the supplementary amplifier device 9 and connected to the output of the amplification unit in reception 7 and to the input of the amplification unit in transmission 8.

The second connection port 11 also has a duplexer or the like suitable for allowing the transmission of the second signal at output S_{O1} and the reception of the second signal at input S_{I1} by means of just one fissured cable 3. Different solutions cannot however be ruled out.

Advantageously, the repeater device 4 comprises adjustment means, indicated generically in figure 2 by the reference 12, suitable for adjusting the power of the first signal at output S_{O1} from the antenna 2 starting with the power value of the first signal at input S_{I1} coming from the base radio station A.

This allows the adjustment of the power of the first signal at output S_{O1} depending on the relative distance between the antenna 2 and the base radio station A.

In particular, the adjustment means 12 comprise a detection unit 13 for detecting the power measurement of the first signal at input S_{I1}, of the type of an RMS detector or the like, associated with the first amplification line 5.

The adjustment means 12 also comprise a calculation unit 14, of the type of a microprocessor or the like, which is suitable for processing the detected power measurement and which is operatively associated with the detection unit 13 and with the amplification unit in transmission 8.

In particular, the calculation unit 14 comprises means of determination 15 of the section attenuation value between the antenna 2 and the base radio station A, determined starting with the power measurement of the first signal at input S_{I1} read by the detection unit 13.

The calculation unit 14 also has first means of definition 16 of the optimal power gain of the amplification unit in transmission 8, defined starting with the above determined section attenuation value.

In particular, by "optimal power gain" is meant that gain value of the amplification unit in transmission 8 which, compared with the determined section attenuation, allows minimising the noise irradiated by the repeater device 4 and received by the base radio station A with the first signal at output S_{O1}.

More specifically, starting with a predetermined reference value of the section attenuation, for example 70dB, the gain of the amplification unit in transmission 8 can be reduced by 1dB for every 1dB drop, below the 70dB in the section attenuation value determined by the calculation unit 14.

This permits dynamically changing the gain of the first signal at output S_{O1} when the relative distance changes between the antenna 2 and the base radio station A and, in particular, permits automatically reducing the gain of the first signal at output S_{O1} when the relative distance is reduced between the antenna 2 and the base radio station A, so as to minimise the noise irradiated by the repeater device 4.

Advantageously, the calculation unit 14 has second means of definition 17 of a maximum power threshold value of the first signal at output S_{O1} starting with the determined section attenuation.

In particular, by "maximum threshold value" is meant that power value of the first signal at output S_{O1} which, if not exceeded, permits minimising the spurious emissions produced by the inter-modulation of the repeater device 4 and transmitted to the base radio station A.

More specifically, starting with a predetermined reference value of the section attenuation, for example 70dB, such maximum threshold value can be reduced by 1dB for every 1dB drop below the 70dB in the section attenuation value determined by the calculation unit 14.

This way, the inter-modulation spurious emissions are reduced from 1dB to 5dB depending on the type of amplifier used and in relation to the order of the inter-modulation spurious emissions.

The power of the first signal at output S_{O1} can be detected and maintained below the above maximum threshold value by means of an ALC (Automatic Level Control) unit of the commonly used type, shown in figure 2 by the reference 18 and operatively associated with the amplification unit in transmission 8.

The method according to the invention considers the reception by means of the antenna 2 of the first signal at input S_{I1} from at least one remote base radio station A, the subsequent amplification by means of the amplification unit in reception 7 of the first signal at input S_{I1} to obtain the second signal at output S_{O2} and, finally, the transmission of the second signal at output S_{O2} by means of the fissured cable 3 installed inside the vehicle V.

At the same time, the method considers the reception by means of the fissured cable 3 of the second signal at input S_{I2} coming from at least one appliance B located inside the vehicle V, the subsequent amplification by means of the amplification unit in transmission 8 of the second signal at input S_{I2} to obtain the first signal at output S_{O1} and, finally, the transmission of the first signal at output S_{O1} by means of the antenna 2 to at least one remote base radio station A. Advantageously, the method comprises the dynamic and automatic adjustment of the power of the first signal at output S_{O1}, by means of the adjustment means 12 and starting with the power measurement of the first signal at input S_{I1}.

In particular, the above adjustment phase comprises reading the power measurement of the first signal at input S_{I1} by means of the detection means 13 and the determination of the section attenuation value between the antenna 2 and the base radio station A, by means of the means of determination 15 of the calculation unit 12, and starting with the determined power measurement.

The adjustment phase also comprises a first definition phase of the optimal power gain of the amplification unit in transmission 8, performed by means of the first definition means 16 of the calculation unit 12, and starting with the determined section attenuation value.

Usefully, the adjustment phase comprises a further second definition phase of the maximum power threshold value of the first signal at output S_{O1}, by means of the second means of definition 17 of the calculation unit 12, and starting with the determined section attenuation value.

Advantageously, the supplementary amplifier device 9 performs a first supplementary amplification phase of the second signal at output S_{O2} before the transmission inside the vehicle V by means of the fissured cable 3.

Similarly, the supplementary amplifier device 9 performs a second supplementary amplification phase of the second signal at input S_{I2} following the reception by means of the fissured cable 3.

It has in point of fact been found how the described invention achieves the proposed objects, and in particular the fact is underlined that the dynamic adjustment of the gain and the power of the first signal at output from the antenna on the basis of the power of the first signal at input permits overcoming the known problems of interaction with a base radio station located near the antenna.

The suitable sizing of the described apparatus also permits operating correctly in the case of communications with two or more base radio stations, minimising the effects of the so-called "near-far problem".

The apparatus and the method described above further allow implementing radio communications through different service providers and using different communication standards, thus permitting the use of the major standards used by the telephone operators such as, for example, GSM, R-GSM, DCS, UMTS, AMPS, PCS, DVB-H and others.

## Claims

1. Apparatus (1) for the radio coverage of a vehicle (V), usable in particular in the field of railway transport, comprising first means of communication (2) installable on a vehicle (V) and adapted to the radio reception/transmission of a first signal at input (S_{I1}) and of a first signal at output (S_{O1}) from/to at least one remote base radio station (A), second means of communication (3) installable on said vehicle (V) and adapted to the radio reception/transmission of a second signal at input (S_{I2}) and of a second signal at output (S_{O2}) from/to at least one appliance (B) positioned inside said vehicle (V), and at least one repeater device (4) positioned in between said first and said second means of communication (2, 3) and having at least one amplification unit in reception (7) suitable for receiving said first signal at input (S_{I1}) and for generating said second signal at output (S_{O2}), at least one amplification unit in transmission (8) adapted to receiving said second signal at input (S_{I2}) and generating said first signal at output (S_{O1}), and adjustment means (12) for adjusting the power of the first signal at output (S_{O1}) from said first means of communication (2) based on the power measurement of said first signal at input (S_{I1}), wherein said adjustment means (12) comprise means of determination (15) of the section attenuation value between said first means of communication (2) and said base radio station (A) based on said power measurement of the first signal at input (S_{I1}), first means of definition (16) of the power gain of said amplification unit in transmission (8), based on said determined section attenuation value, **characterized in that** said adjustment means (12) comprises second means of definition (17) of a maximum power threshold value of said first signal at output (S_{O1}) based on the determined section attenuation, wherein starting with a predetermined reference value of the section attenuation, said maximum power threshold value is reduced by 1dB for every 1dB drop below said predetermined reference value in said determined section attenuation value, and wherein the power of said first signal at output (S_{O1}) is detected and maintained below said maximum threshold value by means of an automatic level control unit operatively associated with said amplification unit in transmission (8).

2. Apparatus (1) according to claim 1, **characterized in that** said adjustment means (12) comprise at least one detection unit (13) for detecting said power measurement of the first signal at input (S_{I1}).

3. Apparatus (1) according to one or more of the preceding claims, **characterized in that** said adjustment means (12) comprise a calculation unit (14) having at least one selected from said means of determination (15), said first means of definition (16) and said second means of definition (17).

4. Apparatus (1) according to claim 3, **characterized in that** said calculation unit (14) is operatively associated with said amplification unit in transmission (8).

5. Apparatus (1) according to one or more of the preceding claims, **characterized in that** said detection unit (13) is operatively associated with said calculation unit (14).

6. Apparatus (1) according to one or more of the preceding claims, **characterized in that** said repeater device (4) comprises at least one first connection port associable with said first means of communication (2) and connected to said amplification units in reception and in transmission.

7. Apparatus (1) according to one or more of the preceding claims, **characterized in that** said repeater device (4) comprises at least a second connection port associable with said second means of communication (3) and connected to said amplification units in reception and in transmission (7, 8).

8. Method for the radio coverage of a vehicle (V), usable in particular in the field of railway transport, comprising:
- a first reception phase of a first signal at input (S_{I1}) from at least a first remote base radio station (A) by means of first means of communication (2) installed on a vehicle (V);
- a first amplification phase of said first signal at input (S_{I1}) to obtain a second signal at output (S_{O2});
- a first transmission phase of said second signal at output (S_{O2}) to at least an apparatus located inside said vehicle (V) by means of second means of communication (3);
- a second reception phase of a second signal at input (S_{I2}) coming from said apparatus by means of said second means of communication (3);
- a second amplification phase of said second signal at input (S_{I2}) to obtain a first signal at output (S_{O1});
- a second transmission phase of said first signal at output (S_{O1}) to said remote base radio station (A) by means of said first means of communication (2);
- at least one adjustment phase of the power of the first signal at output (S_{O1}) from said first means of communication (2) based on the power measurement of said first signal at input (S_{I1}), wherein said adjustment phase comprises the determination of the section attenuation value between said first means of communication (2) and said base radio station (A), based on the power measurement of said first signal at input (S_{I1}) and a first definition phase of the power gain during said second amplification phase based on said determined section attenuation value;
**characterized in that** said adjustment phase comprises a second definition phase of a maximum power threshold value of said first signal at output (S_{O1}) based on said determined section attenuation value, wherein starting with a predetermined reference value of the section attenuation, said maximum power threshold value is reduced by 1dB for every 1dB drop below said predetermined reference value in said determined section attenuation value, and **in that**
the power of said first signal at output (S_{O1}) is detected and maintained below said maximum threshold value by means of an automatic level control unit operatively associated with said amplification unit in transmission (8).

9. Method according to claim 8, **characterized in that** said adjustment phase comprises reading said power measurement of the first signal at input (S_{I2}).

## Patentansprüche

1. Einrichtung (1) für die Funkabdeckung eines Fahrzeuges (V), die insbesondere im Umfeld des Eisenbahntransports verwendet werden kann, umfassend erste Mittel zur Kommunikation (2), die in einem Fahrzeug (V) installiert werden können und für den Funkempfang/die Funkübertragung eines ersten Signals an einem Eingang (S_{I1}) und eines ersten Signals an einem Ausgang (S_{O1}) von/zu mindestens einer entfernt gelegenen Basisfunkstation (A) eingerichtet sind, zweite Mittel zur Kommunikation (3), die in das Fahrzeug (V) installiert werden können und für den Funkempfang/die Funkübertragung eines zweiten Signals an einem Eingang (S_{I2}) und eines zweiten Signals an einem Ausgang (S_{O2}) von/zu mindestens einem Apparat (B) eingerichtet sind, der innerhalb des Fahrzeugs (V) positioniert ist, und mindestens eine Repeatervorrichtung (4), die zwischen den ersten und den zweiten Mitteln zur Kommunikation (2, 3) positioniert ist, und mit mindestens einer Empfangsverstärkungseinheit (7), die zum Empfangen des ersten Signals an dem Eingang (S_{I1}) und zum Erzeugen des zweiten Signals an dem Ausgang (S_{O2}) geeignet ist, und mindestens eine Übertragungsverstärkungseinheit (8), die zum Empfangen des zweiten Signals an dem Eingang (S_{I2}) und zum Erzeugen des ersten Signals an dem Ausgang (S_{O2}) eingerichtet ist, und Anpassungsmittel (12) zum Anpassen der Leistung des ersten Signals an dem Ausgang (S_{O1}) von den ersten Mitteln zur Kommunikation (2) auf der Grundlage der Leistungsmessung des ersten Signals an dem Eingang (S_{I1}), wobei die Anpassungsmittel (12) Mittel zur Bestimmung (15) des Abschnittsdämpfungswertes zwischen den ersten Mitteln zur Kommunikation (2) und der Basisfunkstation (A) auf der Grundlage der Leistungsmessung des ersten Signals an dem Eingang (S_{I1}), erste Mittel zur Definition (16) der Leistungsverstärkung der Übertragungsverstärkungseinheit (8) auf der Grundlage des bestimmten Abschnittsverstärkungswertes umfassen, **dadurch gekennzeichnet, dass** das Anpassungsmittel (12) zweite Mittel zur Definition (17) eines maximalen Leistungsschwellenwertes des ersten Signals an dem Ausgang (S_{O1}) auf der Grundlage der bestimmten Abschnittsdämpfung umfasst, wobei, beginnend mit einem zuvor festgelegten Referenzwert der Abschnittsdämpfung, der maximale Leistungsschwellenwert um 1 dB für jeden Abfall um 1 dB unter den zuvor festgelegten Referenzwert bei dem bestimmten Abschnittsdämpfungswert reduziert wird, und wobei die Leistung des ersten Signals an dem Ausgang (S_{O1}) detektiert wird und unter dem maximalen Schwellenwert mit Hilfe einer automatischen Niveausteuerungseinheit gehalten wird, die der Übertragungsverstärkungseinheit (8) operativ zugeordnet ist.

2. Einrichtung (1) nach Anspruch 1, **dadurch gekennzeichnet, dass** die Anpassungsmittel (12) mindestens eine Detektierungseinheit (13) zum Detektieren der Leistungsmessung des ersten Signals an dem Eingang (S_{I1}) umfassen.

3. Einrichtung (1) nach einem oder mehreren der vorhergehenden Ansprüche, **dadurch gekennzeichnet, dass** die Anpassungsmittel (12) eine Berechnungseinheit (14) mit mindestens einem, das aus den Mitteln zur Bestimmung (15), den ersten Mitteln zur Definition (16) und den zweiten Mitteln zur Definition (17) ausgewählt wird, umfassen.

4. Einrichtung (1) nach Anspruch 3, **dadurch gekennzeichnet, dass** die Berechnungseinheit (14) der Übertragungsverstärkungseinheit (8) operativ zugeordnet ist.

5. Einrichtung (1) nach einem oder mehreren der vorhergehenden Ansprüche, **dadurch gekennzeichnet, dass** die Detektierungseinheit (13) der Berechnungseinheit (14) operativ zugeordnet ist.

6. Einrichtung (1) nach einem oder mehreren der vorhergehenden Ansprüche, **dadurch gekennzeichnet, dass** die Repeatervorrichtung (4) mindestens einen ersten Verbindungsanschluss umfasst, der den ersten Mitteln zur Kommunikation (2) zugeordnet werden kann und mit den Empfangs- und Übertragungsverstärkungseinheiten verbunden wird.

7. Einrichtung (1) nach einem oder mehreren der vorhergehenden Ansprüche, **dadurch gekennzeichnet, dass** die Repeatervorrichtung (4) mindestens einen zweiten Verbindungsanschluss umfasst, der den zweiten Mitteln zur Kommunikation (3) zugeordnet werden kann und mit den Empfangs- und Übertragungsverstärkungseinheiten (7, 8) verbunden wird.

8. Verfahren für die Funkabdeckung eines Fahrzeuges (V), das insbesondere im Umfeld des Eisenbahntransports verwendet werden kann, Folgendes umfassend:
- eine erste Empfangsphase eines ersten Signals an einem Eingang (S_{I1}) von mindestens einer entfernt gelegenen Basisfunkstation (A) mit Hilfe von ersten Mitteln zur Kommunikation (2), die in einem Fahrzeug (V) installiert sind;
- eine erste Verstärkungsphase des ersten Signals an dem Eingang (S_{I1}), um ein zweites Signal an einem Ausgang (S_{O2}) zu erhalten;
- eine erste Übertragungsphase des zweiten Signals an dem Ausgang (S_{O2}) an mindestens eine Einrichtung, die sich innerhalb des Fahrzeuges (V) befindet, mit Hilfe von zweiten Mitteln zur Kommunikation (3);
- eine zweite Empfangsphase eines zweiten Signals an einem Eingang (S_{I2}), das mit Hilfe der zweiten Mittel zur Kommunikation (3) von der Einrichtung kommt;
- eine zweite Verstärkungsphase des zweiten Signals an dem Eingang (S_{I2}), um ein erstes Signal an einem Ausgang (S_{O1}) zu erhalten;
- eine zweite Übertragungsphase des ersten Signals an dem Ausgang (S_{O1}) an die entfernt gelegene Basisfunkstation (A) mittels der ersten Mittel zur Kommunikation (2);
- mindestens eine Anpassungsphase der Leistung des ersten Signals an dem Ausgang (S_{O1}) von den ersten Mitteln zur Kommunikation (2) auf der Grundlage der Leistungsmessung des ersten Signals an dem Eingang (S_{I1}), wobei die Anpassungsphase die Bestimmung des Abschnittsdämpfungswertes zwischen den ersten Mitteln zur Kommunikation (2) und der Basisfunkstation (A) umfasst, auf der Grundlage der Leistungsmessung des ersten Signals an dem Eingang (S_{I1}) und einer ersten Definitionsphase der Leistungsverstärkung während der zweiten Verstärkungsphase auf der Grundlage des bestimmten Abschnittsdämpfungswertes;
**dadurch gekennzeichnet, dass** die Anpassungsphase eine zweite Definitionsphase eines maximalen Leistungsschwellenwertes des ersten Signals an dem Ausgang (S_{O1}) auf der Grundlage des bestimmten Abschnittsdämpfungswertes umfasst, wobei, beginnend mit einem zuvor festgelegten Referenzwert der Abschnittsdämpfung, der maximale Leistungsschwellenwert um 1 dB für jeden Abfall um 1 dB unter den zuvor festgelegten Referenzwert in dem festgelegten Abschnittsdämpfungswertes reduziert wird, und dass die Leistung des ersten Signals an dem Ausgang (S_{O1}) detektiert und unter dem maximalen Schwellenwert mittels einer automatischen Niveausteuerungseinheit gehalten wird, die der Übertragungsverstärkungseinheit (8) operativ zugeordnet ist.

9. Verfahren nach Anspruch 8, **dadurch gekennzeichnet, dass** die Anpassungsphase das Lesen der Leistungsmessung des ersten Signals an dem Eingang (S_{I1}) umfasst.

## Revendications

1. Appareil (1) pour la couverture radio d'un véhicule (V), utilisable en particulier dans le domaine des transports ferroviaires, comprenant des premiers moyens de communication (2) pouvant être installés sur un véhicule (V) et adaptés pour la réception/transmission radio d'un premier signal en entrée (S_{I1}) et d'un premier signal en sortie (S_{O1}) de/vers au moins une station radio de base à distance (A), des deuxièmes moyens de communication (3) pouvant être installés sur ledit véhicule (V) et adaptés pour la réception/transmission radio d'un deuxième signal en entrée (S_{I2}) et d'un deuxième signal en sortie (S_{O2}) de/vers au moins un appareil (B) positionné à l'intérieur dudit véhicule (V), et au moins un dispositif répéteur (4) positionné entre lesdits premier et deuxième moyens de communication (2, 3) et ayant au moins une unité d'amplification en réception (7) adaptée pour recevoir ledit premier signal en entrée (S_{I1}) et pour générer ledit deuxième signal en sortie (S_{O2}), au moins une unité d'amplification en transmission (8) adaptée pour recevoir ledit deuxième signal en entrée (S_{I2}) et générer ledit premier signal en sortie (S_{O1}), et des moyens de réglage (12) pour régler la puissance du premier signal en sortie (S_{O1}) provenant desdits premiers moyens de communication (2) sur la base de la mesure de puissance dudit premier signal en entrée (S_{I1}), dans lequel lesdits moyens de réglage (12) comprennent des moyens de détermination (15) de la valeur d'atténuation de section entre lesdits premiers moyens de communication (2) et ladite station de base radio (A) sur la base de ladite mesure de puissance du premier signal en entrée (S_{I1}), des premiers moyens de définition (16) d'un gain de puissance de ladite unité d'amplification en transmission (8), sur la base de ladite valeur d'atténuation de section déterminée, **caractérisé en ce que** lesdits moyens de réglage (12) comprennent des deuxièmes moyens de définition (17) d'une valeur de seuil de puissance maximale dudit premier signal en sortie (S_{O1}) sur la base de l'atténuation de section déterminée, dans lequel en partant d'une valeur de référence prédéterminée de l'atténuation de section, ladite valeur de seuil de puissance maximale est réduite de 1 dB pour chaque baisse de 1 dB au-dessous de ladite valeur de référence prédéterminée dans ladite valeur d'atténuation de section déterminée et dans lequel la puissance dudit premier signal en sortie (S_{O1}) est détectée et maintenue au-dessous de ladite valeur de seuil maximale au moyen d'une unité de commande de niveau automatique associée fonctionnellement à ladite unité d'amplification en transmission (8).

2. Appareil (1) selon la revendication 1, **caractérisé en ce que** lesdits moyens de réglage (12) comprennent au moins une unité de détection (13) pour détecter ladite mesure de puissance du premier signal en entrée (S_{I1}).

3. Appareil (1) selon une ou plusieurs des revendications précédentes, **caractérisé en ce que** lesdits moyens de réglage (12) comprennent une unité de calcul (14) ayant au moins l'un sélectionné parmi lesdits moyens de détermination (15), lesdits premiers moyens de définition (16) et lesdits deuxièmes moyens de définition (17).

4. Appareil (1) selon la revendication 3, **caractérisé en ce que** ladite unité de calcul (14) est associée fonctionnellement à ladite unité d'amplification en transmission (8).

5. Appareil (1) selon une ou plusieurs des revendications précédentes, **caractérisé en ce que** ladite unité de détection (13) est associée fonctionnellement à ladite unité de calcul (14).

6. Appareil (1) selon une ou plusieurs des revendications précédentes, **caractérisé en ce que** ledit dispositif répéteur (4) comprend au moins un premier port de connexion associable auxdits premiers moyens de communication (2) et connecté auxdites unités d'amplification en réception et en transmission.

7. Appareil (1) selon une ou plusieurs des revendications précédentes, **caractérisé en ce que** ledit dispositif répéteur (4) comprend au moins un deuxième port de connexion associable auxdits deuxièmes moyens de communication (3) et connecté auxdites unités d'amplification en réception et en transmission (7, 8).

8. Procédé pour la couverture radio d'un véhicule (V), utilisable en particulier dans le domaine des transports ferroviaires, comprenant :
- une première étape de réception d'un premier signal en entrée (S_{I1}) à partir d'au moins une station radio de base à distance (A) au moyen de premiers moyens de communication (2) installés sur un véhicule (V) ;
- une première étape d'amplification dudit premier signal en entrée (S_{I1}) pour obtenir un deuxième signal en sortie (S_{O2}) ;
- une première étape de transmission dudit deuxième signal en sortie (S_{O2}) à au moins un appareil situé à l'intérieur dudit véhicule (V) au moyen de deuxièmes moyens de communication (3) ;
- une deuxième étape de réception d'un deuxième signal en entrée (S_{I2}) provenant dudit appareil au moyen desdits deuxièmes moyens de communication (3) ;
- une deuxième étape d'amplification dudit deuxième signal en entrée (S_{I2}) pour obtenir un premier signal en sortie (S_{O1}) ;
- une deuxième étape de transmission dudit premier signal en sortie (S_{O1}) à ladite station radio de base à distance (A) au moyen desdits premiers moyens de communication (2) ;
- au moins une phase de réglage de la puissance du premier signal en sortie (S_{O1}) à partir desdits premiers moyens de communication (2) sur la base de la mesure de puissance dudit premier signal en entrée (S_{I1}), dans lequel ladite étape de réglage comprend la détermination la valeur d'atténuation de section entre lesdits premiers moyens de communication (2) et ladite station de base radio (A), sur la base de la mesure de puissance dudit premier signal en entrée (S_{I1}) et une première étape de définition du gain de puissance durant ladite deuxième étape d'amplification sur la base de ladite valeur d'atténuation de section déterminée ;
**caractérisé en ce que** ladite étape de réglage comprend une deuxième étape de définition d'une valeur de seuil de puissance maximale dudit premier signal en sortie (S_{O1}) sur la base de ladite valeur d'atténuation de section déterminée, dans lequel à partir d'une valeur de référence prédéterminée de l'atténuation de section, ladite valeur de seuil de puissance maximale est réduite de 1 dB pour chaque baisse de 1 dB au-dessous de ladite valeur de référence prédéterminée dans ladite valeur d'atténuation de section déterminée, et **en ce que**
la puissance dudit premier signal en sortie (S_{O1}) est détectée et maintenue au-dessous de ladite valeur de seuil maximale au moyen d'une unité de commande de niveau automatique associée fonctionnellement à ladite unité d'amplification en transmission (8).

9. Procédé selon la revendication 8, **caractérisé en ce que** ladite étape de réglage comprend la lecture de ladite mesure de puissance du premier signal en entrée (S_{I1}).
